# EUROPÄISCHE PATENTSCHRIFT

(11) **EP 3 317 538 B1**
(45) Veröffentlichungstag und Bekanntmachung des Hinweises auf die Patenterteilung: **11.12.2024**
(21) Anmeldenummer: 16740937.4
(22) Anmeldetag: 24.06.2016
(51) Int. Cl.: F04B 9/133, F04B 9/113, F04B 15/02, F04B 13/02, B29B 7/60, B29B 7/74

(54) **VORRICHTUNG ZUM HERSTELLEN EINER MISCHUNG AUS WENIGSTENS EINEM GAS UND WENIGSTENS EINER FLÜSSIGEN KUNSTSTOFFKOMPONENTE**
APPARATUS FOR THE PRODUCTION OF A MIXTURE OF AT LEAST ONE GAS AND AT LEAST ONE LIQUID PLASTIC COMPONENT
DISPOSITIF POUR PRODUIRE UN MÉLANGE COMPOSÉ D'AU MOINS UN GAZ ET D'AU MOINS UN COMPOSANT PLASTIQUE LIQUIDE

(30) Priorität: 03.07.2015 AT 4342015
(43) Veröffentlichungstag der Anmeldung: 09.05.2018
(73) Patentinhaber: Henkel AG & Co. KGaA, 40589 Düsseldorf (DE)
(72) Erfinder: SCHWABL, Christian, 6900 Bregenz (AT); METZLER, Mario, 6890 Lustenau (AT)
(74) Vertreter: Torggler & Hofmann Patentanwälte - Innsbruck
(86) Internationale Anmeldenummer: PCT/AT2016/050225
(87) Internationale Veröffentlichungsnummer: WO 2017/004634

(56) Entgegenhaltungen:
- EP-A1- 2 067 992
- EP-B1- 0 810 917
- WO-A1-2014/195312
- DE-A1- 2 743 452
- DE-A1- 2 917 865
- FR-A1- 2 595 121
- GB-A- 1 503 648

## Beschreibung

Die vorliegende Erfindung betrifft eine Vorrichtung zum Herstellen einer Mischung aus wenigstens einem Gas und wenigstens einer flüssigen Kunststoffkomponente.

Eine bekannte Vorrichtung geht aus Fig. 10 der EP 0 776 745 B1 hervor. Dort ist die Einbringvorrichtung für das wenigstens eine Gas in Form einer Gasdruckflasche ausgebildet. Die Fördervorrichtung für die wenigstens eine flüssige Kunststoffkomponente liegt in Form einer Pumpe vor. In anderen Figuren dieser Schrift sind auch Kolbenpumpen offenbart. Das wenigstens eine Gas und die wenigstens eine flüssige Kunststoffkomponente werden in den Kolbenpumpen selbst gemischt. Die Zufuhr des Gases wird über ein Ventil durchgeführt und geregelt. Wie in dieser Schrift beschrieben, ist es schwierig, die korrekte Gasmenge im richtigen Verhältnis in die flüssige Kunststoffkomponente einzubringen.

Aufgabe der Erfindung ist die Bereitstellung einer Vorrichtung, bei welcher die oben beschriebenen Probleme vermieden werden.

Diese Aufgabe wird durch eine Vorrichtung mit den Merkmalen des Anspruchs 1 gelöst. Vorteilhafte Ausführungsformen der Erfindung sind in den abhängigen Ansprüchen definiert.

Aus den Dokumenten FR 2 595 121 A1, EP 0 810 917 B1, WO 2014/195312 A1, DE 29 17 865 A1 und GB 1 503 648 A gehen lediglich gattungsfremde Vorrichtungen hervor, bei denen zwar teilweise Kolbenpumpen gezeigt sind, welche aber keine Gasquelle aufweisen und somit auch keine Vorrichtung zum Herstellen einer Mischung aus wenigstens einem Gas und wenigstens einer flüssigen Kunststoffkomponente zeigen. Insbesondere bilden die Pumpen dieser Dokumente nicht wechselweise eine Einbringvorrichtung oder eine Fördervorrichtung.

Die Verwendung von Kolbenpumpen sowohl für das wenigstens eine Gas als auch für die flüssige Kunststoffkomponente erlaubt die genaue Ausdosierung von Gas zu flüssiger Kunststoffkomponente. Geht man davon aus, dass ein bestimmtes maximales Füllvolumen der Kolbenpumpe der Fördervorrichtung für die flüssige Kunststoffkomponente vorliegt und dass ein bestimmtes maximales Füllvolumen der Kolbenpumpe der Einbringvorrichtung für das wenigstens eine Gas vorhanden ist (dieses kann gleich oder verschieden vom Füllvolumen der Fördervorrichtung sein), so kann die der flüssigen Kunststoffkomponente zugeführte Menge an Gas über den Druck beeinflusst werden, mit welchem das Gas in die Einbringvorrichtung gefüllt wird. Die erfindungsgemäße Lösung ist kostengünstiger, konstruktiv einfacher und baut kleiner.

Um eine besonders einfache und kostengünstige Ausführung zu erreichen, ist vorgesehen, dass der Kolben der Einbringvorrichtung und der Kolben der Fördervorrichtung mechanisch oder elektrisch gekoppelt sind.

Für diese Koppelung gibt es zwei Ausführungsvarianten. Bei einer mechanisch gegengleichen Koppelung ist vorgesehen, dass der Kolben der Einbringvorrichtung und der Kolben der Fördervorrichtung derart gekoppelt sind, dass bei einem Ausbringen von Gas aus der Einbringvorrichtung flüssige Kunststoffkomponente in die Fördervorrichtung eingebracht wird und bei einem Ausbringen von flüssiger Kunststoffkomponente aus der Fördervorrichtung Gas in die Einbringvorrichtung eingebracht wird. Demgegenüber ist bei einer parallelen bzw. mechanisch synchronen Koppelung vorgesehen, dass der Kolben der Einbringvorrichtung und der Kolben der Fördervorrichtung derart gekoppelt sind, dass bei einem Ausbringen von Gas aus der Einbringvorrichtung flüssige Kunststoffkomponente aus der Fördervorrichtung ausgebracht wird und bei einem Einbringen von Gas in die Einbringvorrichtung flüssige Kunststoffkomponente in die Fördervorrichtung eingebracht wird.

Schutz wird auch begehrt für eine Vorrichtung zur Herstellung von geschäumten Kunststoffteilen, insbesondere Dichtungsraupen, mit einer erfindungsgemäßen Vorrichtung zum Herstellen einer Mischung aus wenigstens einem Gas und wenigstens einer flüssigen Kunststoffkomponente.

Ausführungsformen werden anhand der Figuren diskutiert. Es zeigen:
- Fig. 1: schematisch eine Vorrichtung zur Herstellung von geschäumten Kunststoffteilen,
- Fig. 2: ein erstes Ausführungsbeispiel einer Kolbenpumpe, bei welcher die Kolben mechanisch gegengleich gekoppelt sind,
- Fig. 3: eine Variante des Ausführungsbeispiels der Fig. 2,
- Fig. 4: ein Ausführungsbeispiel, bei welchem die Kolben mechanisch synchron gekoppelt sind,
- Fig. 5: ein Ausführungsbeispiel, bei welchem die Kolben elektrisch gekoppelt sind,
- Fig. 6: ein Ausführungsbeispiel der Erfindung, wobei die eine Kolbenpumpe und die andere Kolbenpumpe jeweils wechselweise als Einbringvorrichtung und als Fördervorrichtung ausgebildet sind,
- Fig. 7: im Detail die Puffervorrichtung und
- Fig. 8: eine alternative Variante der Puffervorrichtung.

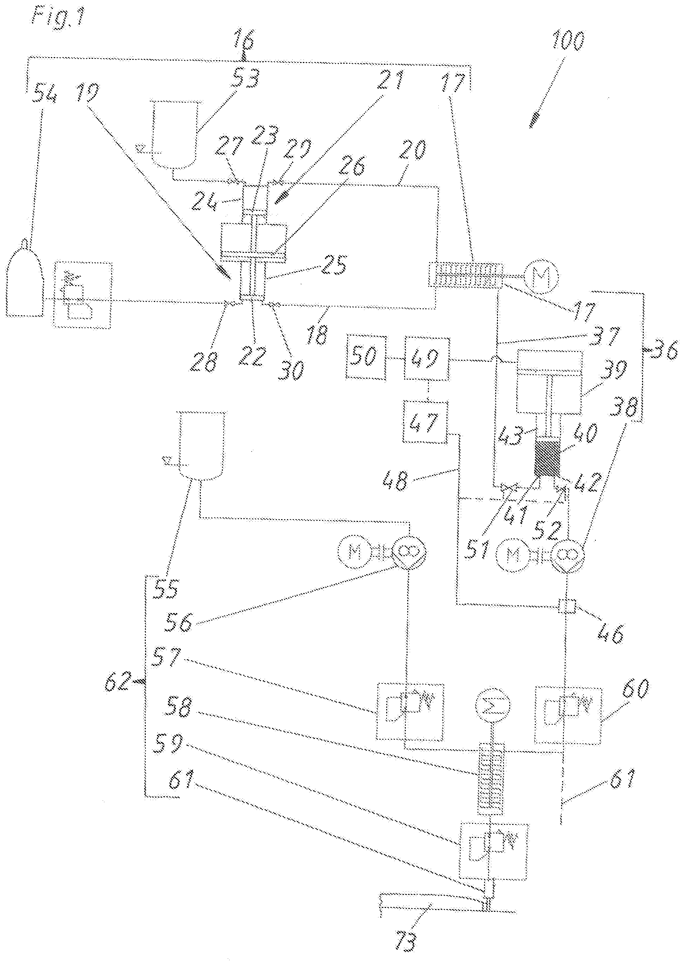

Fig. 1 zeigt in seiner Gesamtheit schematisch eine Vorrichtung 100 zur Herstellung von geschäumten Kunststoffteilen, insbesondere von Dichtungsraupen. Diese Vorrichtung 100 weist wiederum mehrere wesentliche Untereinheiten auf.

Eine solche Untereinheit wird durch eine Vorrichtung 16 zum Herstellen einer Mischung aus wenigstens einem Gas und wenigstens einer flüssigen Kunststoffkomponente gebildet. Diese Vorrichtung 16 wiederum weist zumindest eine Mischvorrichtung 17, eine über eine erste Leitung 18 mit der Mischvorrichtung 17 verbundene Einbringvorrichtung 19 für das wenigstens eine Gas und eine über eine zweite Leitung 20 mit der Mischvorrichtung 17 verbundene Fördervorrichtung 21 für die wenigstens eine flüssige Kunststoffkomponente auf. Zudem weist diese Vorrichtung 16 einen Behälter 53 für die Kunststoffkomponente und eine Gasquelle 54, insbesondere eine Drucklufterzeugungsvorrichtung, auf. Statt des Behälters 53 könnte auch eine Förderpumpe vorgesehen sein.

Bei einer solchen Vorrichtung 16 ist im Gegensatz zum Stand der Technik vorgesehen, dass die Einbringvorrichtung 19 und die Fördervorrichtung 21 als Kolben 22 und 23 aufweisende Kolbenpumpen 25 und 24 ausgebildet sind.

Der Kolben 22 der Einbringvorrichtung 19 (Kolbenpumpe 25) und der Kolben 23 der Fördervorrichtung 21 (Kolbenpumpe 24) sind in diesem Beispiel mechanisch gegengleich über einen Druckübersetzer 26 gekoppelt. Dieser gestattet die Verwendung eines Antriebs, der bei relativ geringem Druck arbeitet (z.B. Pneumatik), da über die Kraftübersetzung die notwendige Krafterhöhung erfolgt. Zu sehen sind außerdem Einlassventile 27, 28 und Auslassventile 29, 30.

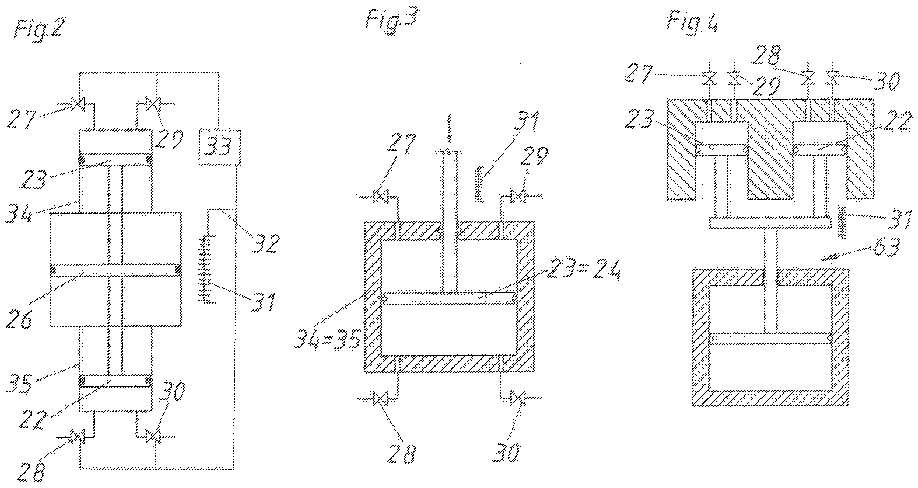

Wie in Fig. 2 detaillierter gezeigt, werden diese Einlassventile 27, 28 und Auslassventile 29, 30 durch eine Steuereinrichtung 33 abgestimmt auf die Bewegung der gekoppelten Kolben 22, 23 betätigt. Dargestellt ist außerdem ein Sensor 31, welcher über eine Signalleitung 32 mit der Steuereinrichtung 33 zur Signalübertragung in Verbindung steht. Der Sensor 31 dient zur Bestimmung der Position des Druckübersetzers 26. Damit wird auch die Position der Kolben 22, 23 bestimmt. Die Position der Kolben 22, 23 kann über den Sensor 31 auch direkt bestimmt werden (siehe die weiteren Ausführungsbeispiele). Generell kann mit einem solchen Sensor 31 eine Leckageerkennung erfolgen, nämlich wenn die Kolbendichtungen zwischen dem Kolben 23 und dem Zylinder 34 der Einbringvorrichtung 19, die Kolbendichtungen zwischen dem Kolben 22 und dem Zylinder 35 der Fördervorrichtung 21 und/oder zumindest eines der Ventile 27 bis 30 verschlissen sind. Zur Leckageerkennung werden z.B. Einlassventil 28 und Auslassventil 30 der Gasseite geschlossen. Durch den Kolben 22 wird eine Komprimierung des zwischen Einlassventil 28 und Auslassventil 30 befindlichen Gasvolumens durchgeführt. Liegt ein Leck vor, kommt es nach erfolgter Komprimierung zu einer irregulären Bewegung des Druckübersetzers 26, die vom Sensor 31 detektiert wird. Es kann außerdem überprüft werden, ob in der flüssigen Kunststoffkomponente irreguläre Gasanteile vorhanden sind, da diese bei geschlossenem Einlassventil 27 und Auslassventil 29 zu einem Bewegen des Kolbens 23 führen, da die flüssige Kunststoffkomponente durch die irregulären Gasanteile kompressibel ist. Dies kann gegebenenfalls durch die Steuereinrichtung 33 ausgeglichen werden.

Fig. 3 zeigt eine einzelne Kolbenpumpe, welche gleichzeitig die Kolbenpumpe 24 für die Fördervorrichtung 21 und die Kolbenpumpe 25 für die Einbringvorrichtung 19 bildet. Bei dieser Variante ist kein separater Druckübersetzer vorgesehen, vielmehr bildet ein Kolben sowohl den Kolben 23 der Kolbenpumpe 24 als auch den Kolben 22 der Kolbenpumpe 25. Auch dieses System gemäß Fig. 3 arbeitet mechanisch gegengleich. Das heißt, wenn über die (unten dargestellte) Einbringvorrichtung 19 Gas ausgebracht wird, wird flüssige Kunststoffkomponente in die Fördervorrichtung 21 eingebracht und umgekehrt.

Demgegenüber zeigt Fig. 4 ein System, bei welchem die Kolbenpumpen 24 und 25 mechanisch synchron gekoppelt sind. Konkret sind der Kolben 22 der Einbringvorrichtung 19 und der Kolben 23 der Fördervorrichtung 21 über einen Koppelmechanismus 63 derart gekoppelt, dass bei einem Ausbringen von Gas aus der Einbringvorrichtung 19 flüssige Kunststoffkomponente aus der Fördervorrichtung 21 ausgebracht wird und bei einem Einbringen von Gas in die Einbringvorrichtung 19 flüssige Kunststoffkomponente in die Fördervorrichtung 21 eingebracht wird.

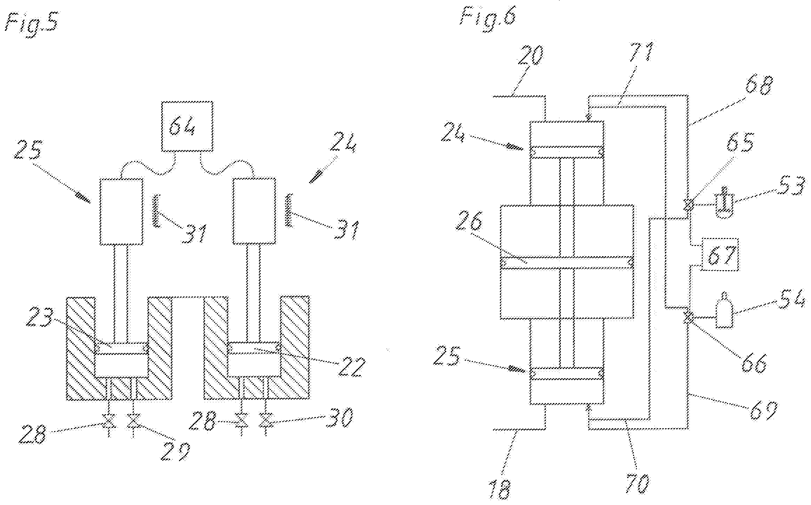

Fig. 5 zeigt eine elektronische Koppelung der Kolbenpumpen 24 und 25. Dabei wird die Bewegung der Kolben 22 und 23 von einer Steuervorrichtung 64 gesteuert, welche mit Antriebsvorrichtungen der beiden Kolbenpumpe 24 und 25 in signaltechnischer Verbindung steht. Die Kolben 22 und 23 können gegengleich oder synchron bewegt werden. Dies ist über die Steuervorrichtung 64 einstellbar.

Fig. 6 zeigt eine Kolbenpumpe 25 und eine Kolbenpumpe 24, die jeweils wechselweise die Einbringvorrichtung 19 oder die Fördervorrichtung 21 bilden. Ein Vorteil besteht dabei darin, dass auf beiden Seiten die Dichtungen abwechselnd durch die flüssige Kunststoffkomponente geschmiert werden. Ein Wechsel ist nach eine vorgebbaren Anzahl von Zyklen möglich. Der Wechsel erfolgt über Schaltvorrichtung 65 und 66, welche entweder händisch umgeschaltet werden können oder aber bevorzugt über eine Steuervorrichtung 67, vorzugsweise regelmäßig, umgeschaltet werden. In der ersten Schaltstellung wird die flüssige Kunststoffkomponente vom Behälter 53 über eine erste Leitung 68 zur (oben dargestellten) Kolbenpumpe 24 gefördert, während das Gas von der Gasquelle 54 über die zweite Leitung 69 zur Kolbenpumpe 25 gefördert wird. Insofern stimmt das gesamte System in dieser ersten Schaltstellung mit den Fig. 1 und 2 überein. In der zweiten Schaltstellung allerdings erfolgt eine Umleitung. Konkret wird in dieser zweiten Schaltstellung die flüssige Kunststoffkomponente vom Behälter 53 über eine dritte Leitung 70 zur (unten dargestellten) Kolbenpumpe 25 gefördert, während das Gas von der Gasquelle 54 über eine vierte Leitung 71 zur Kolbenpumpe 24 gefördert wird. In dieser zweiten Schaltstellung bildet demnach - umgekehrt zur ersten Schaltstellung - die Kolbenpumpe 25 die Fördervorrichtung 21 und die Kolbenpumpe 24 die Einbringvorrichtung 19. Je nach Schaltstellung wird dann über die erste Leitung 18 bzw. die zweite Leitung 20 die flüssige Kunststoffkomponente bzw. das Gas zur Mischvorrichtung 17 weitergepumpt.

Zurückkehrend zu Fig. 1 wird eine weitere Untereinheit der Vorrichtung 100 durch eine Vorrichtung 36 Bereitstellen einer, vorzugsweise mit Gas vermischten, flüssigen Kunststoffkomponente für eine Dosiervorrichtung 38 gebildet. Diese Vorrichtung 36 weist eine Quelle 37 für wenigstens eine flüssige Kunststoffkomponente auf. Bevorzugt wird diese Quelle 37 durch eine Leitung gebildet, welche von der bereits angeführten Mischvorrichtung 17 wegführt. Weiters weist diese Vorrichtung 36 eine intermittierend arbeitende Weiterleitungsvorrichtung für die wenigstens eine flüssige Kunststoffkomponente auf. Diese intermittierend arbeitende Weiterleitungsvorrichtung wird durch die Kolbenpumpen 24, 25 gebildet, kann aber auch eine sonstige, beliebig ausgebildete Einrichtung sein, welche geeignet ist, die flüssige Kunststoffkomponente intermittierend weiterzuleiten. Unter einer intermittierend arbeitenden Quelle wird nicht nur eine Quelle verstanden, deren Förderleistung auf Null abfällt (z. B. eine Kolbenpumpe), sondern auch eine Quelle, deren Förderleistung, insbesondere pulsierenden, Schwankungen unterworfen ist (z. B. Zahnradpumpe).

Die Vorrichtung 36 weist darüber hinaus eine Dosiervorrichtung 38, vorzugsweise eine Dosierpumpe, auf, für welche die Kunststoffkomponente von der Weiterleitungsvorrichtung bereitgestellt wird. Zudem weist die Vorrichtung 36 eine zwischen der Quelle 37 für die wenigstens eine flüssige Kunststoffkomponente und der Dosiervorrichtung 38 angeordnete Puffervorrichtung 39 mit einem variablen Puffervolumen 40 auf, durch welche die intermittierend zur Puffervorrichtung 39 geförderte flüssige Kunststoffkomponente stets in ausreichender Menge mit ausreichendem Vorspanndruck für die Dosiervorrichtung 38 zur Verfügung gestellt wird. Nach der Dosiervorrichtung 38 gelangt die Kunststoffkomponente zu einem Dosierventil 60, wonach die Kunststoffkomponente direkt (siehe strichliert dargestellte Düse 61) - oder wie in Fig. 1 dargestellt indirekt über ein weiteres Mischelement 58 - über eine Düse 61 ausgebracht und durch das Ausbringen und den damit einhergehenden Druckabfall ausschäumt.

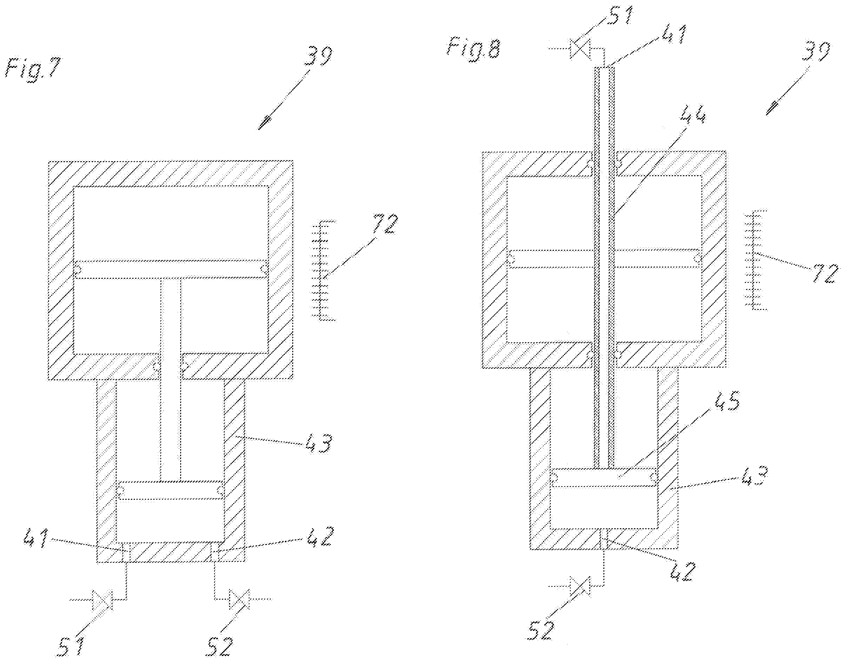

Um eine möglichst gleichbleibende Weiterleitung zu ermöglichen, ist bevorzugt vorgesehen, dass durch die Puffervorrichtung 39 der zwischen Puffervorrichtung 39 und Dosiervorrichtung 38 in der flüssigen Kunststoffkomponente herrschende Druck steuerbar ist. Über eine Einlassöffnung 41 gelangt die flüssige Kunststoffkomponente von der Quelle 37 in das Puffervolumen 40 der Puffervorrichtung 39. Über eine Auslassöffnung 42 ist das Puffervolumen 40 wiederum mit der Dosiervorrichtung 38 verbunden. In Fig. 1 ist die Einlassöffnung 41 in einer Wandung eines Gehäuses 43 der Puffervorrichtung 39 ausgebildet. Dies ist ebenso in Fig. 7 ersichtlich. Alternativ kann aber auch vorgesehen sein, dass die Einlassöffnung 41 in einer mit einem Kolben 45 verbundenen Kolbenstange 44 der Puffervorrichtung 39 ausgebildet ist (siehe Fig. 8). Weiters ist vor der Einlassöffnung ein Einlassventil 51 und nach der Auslassöffnung 42 eine Auslassventil 52 angeordnet. Zudem kann ein Wegsensor 72 vorgesehen sein, mit welchem wenigstens ausgewählte Positionen des Kolbens 45 im Gehäuse 43 bestimmbar sind.

Weiters ist vorgesehen, dass auf einer Ausgangsseite der Dosiervorrichtung 38 ein Drucksensor 46 angeordnet ist. Dieser Drucksensor 46 steht mit einer Steuervorrichtung 47 über eine Steuerleitung 48 in Verbindung. Die Steuervorrichtung 47 steuert die Puffervorrichtung 39 derart, dass der auf der Eingangsseite der Dosiervorrichtung 38 anliegende Druck dem auf der Ausgangsseite der Dosiervorrichtung 38 herrschenden Druck nachgeführt wird. Weiters kann die Steuervorrichtung 47 so ausgebildet sein, sowohl das Einlassventil 51 als auch das Auslassventil 52 zu schließen und die sich im Puffervolumen 40 befindliche flüssige Kunststoffkomponente zu komprimieren. Zudem kann ein nicht dargestellter Sensor vorgesehen sein, durch den eine irreguläre Komprimierung des Puffervolumens 40 detektierbar ist.

Weiters ist die Puffervorrichtung 39 mit einer Vorrichtung 49 zur Druckbeaufschlagung der Puffervorrichtung 39 verbunden. Diese ist entweder durch die Steuervorrichtung 47 (strichliert eingezeichnete Leitung) oder durch eine eigenständige Steuervorrichtung 50 ansteuerbar.

Prinzipiell würden für die Herstellung von geschäumten Kunststoffteilen in Form von Dichtungsraupen bereits die beiden Vorrichtungen 16 und 36 genügen. Es kann aber zusätzlich bevorzugt vorgesehen sein, dass eine zweite Kunststoffkomponente parallel zur ersten Kunststoffkomponente oder gemischt mit der ersten Kunststoffkomponente zum Kunststoffteil, vorzugsweise physikalisch, ausschäumt. Deswegen wird eine weitere Untereinheit der Vorrichtung 100 durch eine Vorrichtung 62 zum Mehrkomponentenschäumen gebildet (siehe wieder Fig. 1). Diese Vorrichtung 54 weist einen Behälter 55 für eine zweite Kunststoffkomponente auf, von welcher die, vorzugsweise mit Gas vermengte, zweite Kunststoffkomponente über eine Dosiervorrichtung 56 und einem Dosierventil 57 zum Mischelement 58 geführt wird. In diesem Mischelement 58 wird diese zweite Kunststoffkomponente mit der ersten Kunststoffkomponente vermischt. Anschließend wird diese Mischung nach einem weiteren Dosierventil 59 über eine schematisch angedeutete Düse 61 ausgebracht, wodurch das in der Mischung enthaltene Gas ausschäumt. Anders ausgedrückt kommt es durch das Ausbringen zu einem Druckabfall, das Gas bringt die flüssige Kunststoffkomponente zum Schäumen und es entsteht nach Aushärtung der geschäumten Kunststoffkomponente ein mit Poren versehener Kunststoffteil zum Beispiel in Form einer Dichtungsraupe 73.

In den Dosierventilen 57 und/oder 60 können ebenso Sperrventile vorgesehen sein, wie sie in der Fig. 1 mit den Bezugszeichen 51 und 52 versehen als Einlass- und Auslassventil Verwendung finden.

### Bezugszeichenliste:

- 16: Vorrichtung
- 17: Mischvorrichtung
- 18: erste Leitung
- 19: Einbringvorrichtung
- 20: zweite Leitung
- 21: Fördervorrichtung
- 22: Kolben
- 23: Kolben
- 24: Kolbenpumpe
- 25: Kolbenpumpe
- 26: Druckübersetzer
- 27: Einlassventil
- 28: Einlassventil
- 29: Auslassventil
- 30: Auslassventil
- 31: Sensor
- 32: Signalleitung
- 33: Steuereinrichtung
- 34: Zylinder
- 35: Zylinder
- 36: Vorrichtung zum Weiterleiten einer flüssigen Kunststoffkomponente
- 37: Quelle
- 38: Dosiervorrichtung
- 39: Puffervorrichtung
- 40: Puffervolumen
- 41: Einlassöffnung
- 42: Auslassöffnung
- 43: Gehäuse
- 44: Kolbenstange
- 45: Kolben
- 46: Drucksensor
- 47: Steuervorrichtung
- 48: Steuerleitung
- 49: Vorrichtung zur Druckbeaufschlagung
- 50: Steuervorrichtung
- 51: Einlassventil
- 52: Auslassventil
- 53: Behälter für Kunststoffkomponente
- 54: Gasquelle
- 55: Behälter für zweite Kunststoffkomponente
- 56: Mischvorrichtung
- 57: Dosierventil
- 58: Mischelement
- 59: Dosierventil
- 60: Dosierventil
- 61: Düse
- 62: Vorrichtung zum Mehrkomponentenschäumen
- 63: Koppelmechanismus
- 64: Steuervorrichtung
- 65: Schaltvorrichtung
- 66: Schaltvorrichtung
- 67: Steuervorrichtung
- 68: erste Leitung
- 69: zweite Leitung
- 70: dritte Leitung
- 71: vierte Leitung
- 72: Wegsensor
- 73: Dichtungsraupe
- 100: Vorrichtung zur Herstellung von geschäumten Kunststoffteilen

## Patentansprüche

1. Vorrichtung (16) zum Herstellen einer Mischung aus wenigstens einem Gas und wenigstens einer flüssigen Kunststoffkomponente, mit einem Behälter (53) oder einer Förderpumpe für die wenigstens eine flüssige Kunststoffkomponente, einer Gasquelle (54) und einer Mischvorrichtung (17), welche über eine erste Leitung (18) mit einer Einbringvorrichtung (19) für das wenigstens eine Gas und über eine zweite Leitung (20) mit einer Fördervorrichtung (21) für die wenigstens eine flüssige Kunststoffkomponente verbunden ist, wobei die Einbringvorrichtung (19) und die Fördervorrichtung (21) als Kolben (22, 23) aufweisende Kolbenpumpen (25, 24) mit Einlassventilen (27, 28) und Auslassventilen (29, 30) ausgebildet sind, wobei der Kolben (22) der Einbringvorrichtung (19) und der Kolben (23) der Fördervorrichtung (21) mechanisch oder elektrisch gekoppelt sind, wobei die Einlassventile (27, 28) und Auslassventile (29, 30) durch eine Steuereinrichtung (33) abgestimmt auf die Bewegung der gekoppelten Kolben (22, 23) betätigbar sind, wobei die Vorrichtung (16) einen Sensor (31) umfasst, welcher über eine Signalleitung (32) mit der Steuereinrichtung (33) zur Signalübertragung in Verbindung steht und zur Bestimmung der Position der Kolben (22, 23) dient, wobei beide Kolbenpumpen (24, 25) jeweils wechselweise die Einbringvorrichtung (19) oder die Fördervorrichtung (21) bilden.

2. Vorrichtung (16) nach Anspruch 1, wobei der Kolben (22) der Einbringvorrichtung (19) und der Kolben (23) der Fördervorrichtung (21) derart gekoppelt sind, dass bei einem Ausbringen von Gas aus der Einbringvorrichtung (19) flüssige Kunststoffkomponente in die Fördervorrichtung (21) eingebracht wird und bei einem Ausbringen von flüssiger Kunststoffkomponente aus der Fördervorrichtung (21) Gas in die Einbringvorrichtung (19) eingebracht wird.

3. Vorrichtung (16) nach Anspruch 1, wobei der Kolben (22) der Einbringvorrichtung (19) und der Kolben (23) der Fördervorrichtung (21) derart gekoppelt sind, dass bei einem Ausbringen von Gas aus der Einbringvorrichtung (19) flüssige Kunststoffkomponente aus der Fördervorrichtung (21) ausgebracht wird und bei einem Einbringen von Gas in die Einbringvorrichtung (19) flüssige Kunststoffkomponente in die Fördervorrichtung (21) eingebracht wird.

4. Vorrichtung (100) zur Herstellung von geschäumten Kunststoffteilen, insbesondere Dichtungsraupen, mit einer Vorrichtung (16) nach einem der Ansprüche 1 bis 3.

## Claims

1. A device (16) for producing a mixture of at least one gas and at least one liquid plastics component, comprising a container (53) or a conveying pump for the at least one liquid plastics component, a gas source (54) and a mixing device (17) which is connected via a first line (18) to an introducing device (19) for the at least one gas and via a second line (20) to a conveying device (21) for the at least one liquid plastics component, wherein the introducing device (19) and the conveying device (21) are designed as piston pumps (25, 24) that comprise pistons (22, 23) and have inlet valves (27, 28) and outlet valves (29, 30), wherein the piston (22) of the introducing device (19) and the piston (23) of the conveying device (21) are mechanically or electrically coupled, wherein the inlet valves (27, 28) and outlet valves (29, 30) can be actuated in accordance with the movement of the coupled pistons (22, 23) by means of a controller (33), wherein the device (16) comprises a sensor (31) which is connected to the controller (33) via a signal line (32) for signal transmission and is used to determine the position of the pistons (22, 23), wherein the two piston pumps (24, 25) in each case alternately form the introducing device (19) or the conveying device (21).

2. The device (16) according to claim 1, wherein the piston (22) of the introducing device (19) and the piston (23) of the conveying device (21) are coupled in such a way that when gas is discharged from the introducing device (19), the liquid plastics component is introduced into the conveying device (21) and when the liquid plastics component is discharged from the conveying device (21), gas is introduced into the introducing device (19).

3. The device (16) according to claim 1, wherein the piston (22) of the introducing device (19) and the piston (23) of the conveying device (21) are coupled in such a way that when gas is discharged from the introducing device (19), the liquid plastics component is discharged from the conveying device (21) and when gas is introduced into the introducing device (19), the liquid plastics component is introduced into the conveying device (21).

4. A device (100) for producing foamed plastics parts, in particular sealing beads, comprising a device (16) according to one of claims 1 to 3.

## Revendications

1. Dispositif (16) permettant la production d'un mélange composé d'au moins un gaz et d'au moins un composant en matière plastique liquide, comportant un récipient (53) ou une pompe d'alimentation pour l'au moins un composant en matière plastique liquide, une source de gaz (54) et un dispositif de mélange (17) qui est raccordé par l'intermédiaire d'une première conduite (18) à un dispositif d'introduction (19) pour l'au moins un gaz et est raccordé par l'intermédiaire d'une seconde conduite (20) à un dispositif d'alimentation (21) pour l'au moins un composant en matière plastique liquide, dans lequel le dispositif d'introduction (19) et le dispositif d'alimentation (21) sont réalisés sous forme de pompes à piston (25, 24) présentant des pistons (22, 23) et comportant des soupapes d'admission (27, 28) et des soupapes d'échappement (29, 30), dans lequel le piston (22) du dispositif d'introduction (19) et le piston (23) du dispositif d'alimentation (21) sont accouplés mécaniquement ou électriquement, dans lequel les soupapes d'admission (27, 28) et les soupapes d'échappement (29, 30) peuvent être actionnées par un appareil de commande (33) en fonction du mouvement des pistons (22, 23) accouplés, dans lequel le dispositif (16) comprend un capteur (31) qui est connecté à l'appareil de commande (33) par l'intermédiaire d'une ligne d'acheminement de signaux (32) pour la transmission de signaux et sert à la détermination de la position des pistons (22, 23), dans lequel les deux pompes à piston (24, 25) forment respectivement alternativement le dispositif d'introduction (19) ou le dispositif d'alimentation (21).

2. Dispositif (16) selon la revendication 1, dans lequel le piston (22) du dispositif d'introduction (19) et le piston (23) du dispositif d'alimentation (21) sont accouplés de telle sorte que, lors d'une évacuation de gaz hors du dispositif d'introduction (19), un composant en matière plastique liquide est introduit dans le dispositif d'alimentation (21) et, lors d'une évacuation de composant en matière plastique liquide hors du dispositif d'alimentation (21), un gaz est introduit dans le dispositif d'introduction (19).

3. Dispositif (16) selon la revendication 1, dans lequel le piston (22) du dispositif d'introduction (19) et le piston (23) du dispositif d'alimentation (21) sont accouplés de telle sorte que, lors d'une évacuation de gaz hors du dispositif d'introduction (19), un composant en matière plastique liquide est évacué hors du dispositif d'alimentation (21) et, lors d'une introduction de gaz dans le dispositif d'introduction (19), un composant en matière plastique liquide est introduit dans le dispositif d'alimentation (21).

4. Dispositif (100) permettant la production de pièces en matière plastique expansée, en particulier de cordons d'étanchéité, comportant un dispositif (16) selon l'une des revendications 1 à 3.
